# EUROPEAN PATENT APPLICATION

(11) **EP 3 550 266 A1**
(43) Date of publication of application: **09.10.2019**
(21) Application number: 17877955.9
(22) Date of filing: 09.08.2017
(51) Int. Cl.: G01C 21/34

(54) **ROAD DETERMINATION METHOD AND DEVICE**

(30) Priority: 07.12.2016 CN 201611114698
(71) Applicant: Beijing Sankuai Online Technology Co., Ltd, Beijing 100102 (CN)
(72) Inventor: LIU, Dongxu, Beijing 100102 (CN)
(74) Representative: Manitz Finsterwald Patent- und Rechtsanwaltspartnerschaft mbB
(86) International application number: PCT/CN2017/096572
(87) International publication number: WO 2018/103363

(57) **Abstract**

The present application provides a road determination method and apparatus. The method includes: predefining an obstacle as a road; acquiring information about a first place, and determining a first road nearest to the first place; and determining a region boundary according to the first place and the first road if the first road is the predefined obstacle, and determining a region, which is located at a side of the region boundary and does not contain the first road, as an available road region.

## Description

### CROSS-REFERENCE TO RELATED APPLICATIONS

This patent application claims the priority to the Chinese Patent Application No. 201611114698.5 entitled "ROAD DETERMINATION METHOD AND APPARATUS" filed on December 7, 2016, the entire content of which is incorporated herein by reference.

### FIELD OF TECHNOLOGY

The present application relates to a road determination method and apparatus in the field of route planning technologies.

### BACKGROUND

With the development of route planning technologies and intelligent terminal technologies, more and more terminal devices have route navigation functions. Through the route navigation functions of the terminals, an optimal route between two places (e.g., a starting point and an end point) may be designed for users, thus making it convenient for the users to travel. The optimal route generally is the shortest route between the starting point and the end point.

In actual traffic routes, all roads are connected to each other, and the principle of route planning is to determine the shortest route between the starting point and the end point along each road. Based on the principle of route planning, in the process of route planning, if a place (e.g., the starting point and the end point) provided by the user is not on a road, but in other places such as squares, indoors and parks, the place may be mapped to a road, a mapping point corresponding to the place may be determined on the road, and route planning is carried out based on the mapping point.

### SUMMARY

On this account, an objective of the present application is to provide a road determination method and apparatus.

In a first aspect, an embodiment of the present application provides a road determination method. The method includes: predefining an obstacle as a road; acquiring information about a first place, and determining a first road nearest to the first place; and determining a region boundary according to the first place and the first road if the first road is the predefined obstacle, and determining a region, which is located at a side of the region boundary and does not contain the first road, as an available road region.

In combination with the first aspect, an embodiment of the present application provides a first possible implementation in the first aspect. The predefining the obstacle as the road includes: marking the obstacle as one or more roads according to a turning condition of the obstacle.

According to the first possible implementation in combination with the first aspect, an embodiment of the present application provides a second possible implementation in the first aspect. The marking the obstacle as one or more roads according to the turning condition of the obstacle includes: marking the obstacle as a plurality of roads connected successively according to each turning point of the obstacle if the obstacle has turning points; otherwise marking the obstacle as one road.

In combination with the first aspect, an embodiment of the present application provides a third possible implementation in the first aspect. The determining the region boundary according to the first place and the first road includes: determining a route, which is at a preset distance from the first place and parallel to the first road, as the region boundary. The preset distance is larger than zero and less than a vertical distance between the first place and the first road.

In combination with the first aspect, an embodiment of the present application provides a fourth possible implementation in the first aspect. The determining the region boundary according to the first place and the first road includes: determining a route, which passes across the first place and parallels to the first road, as the region boundary.

According to the above implementation in combination with the first aspect, an embodiment of the present application provides a fifth possible implementation in the first aspect. The method further includes: determining a second road nearest to the first place within the available road region.

According to the above implementation in combination with the first aspect, an embodiment of the present application provides a sixth possible implementation in the first aspect. The method further includes: selecting a second place nearest to the first place on the second road within the available road region; and performing route planning according to the second place.

In a second aspect, an embodiment of the present application provides a road determination apparatus, which includes: a processor and a machine-readable storage medium. The machine-readable storage medium stores machine-executable instructions executable by the processor. The processor is caused by the machine-executable instructions to: predefine an obstacle as a road; acquire information about a first place, and determine a first road nearest to the first place; and determine a region boundary according to the first place and the first road if the first road is the predefined obstacle, and determine a region, which is located at a side of the region boundary and does not contain the first road, as an available road region.

In a third aspect, an embodiment of the present application provides a machine-readable storage medium, which stores machine-executable instructions. When being called and executed by a processor, the machine-executable instructions cause the processor to perform the road determination method according to the first aspect.

In the embodiments of the present application, first an obstacle is predefined as a road, then information about a first place is acquired, and next a first road nearest to the first place is determined. A region boundary is determined according to the first place and the first road if the first road is the predefined obstacle, and a region which is located at a side of the region boundary and does not contain the first road is determined as an available road region. The available road region determined in the embodiments of the present application does not contain the first road, and thus an obstacle nearest to the first place is excluded from the available road region. Therefore, within the available road region, it may be conveniently determined a road between which and the first place no obstacle exists. Using the road determination method and apparatus provided in this embodiment, an available road region may be provided, and it is convenient to determine, within the available road region, a road between which and a place no obstacle exists. In this way, it is solved the problem of unreasonable route planning caused by obstacles such as railways or rivers present between the place and the determined road.

To make the above objectives, features and advantages of the present application more apparent and pellucid, a detailed description is made below by illustrating preferred embodiments with reference to the accompanying drawings.

### BRIEF DESCRIPTION OF THE DRAWINGS

To describe the technical solutions of the embodiments of the present application more clearly, the accompanying drawings required for describing the embodiments will be briefly introduced below. It is to be understood that the following accompanying drawings show merely some embodiments of the present application, and thus should not be regarded as limiting a scope. To those of ordinary skills in the art, other related accompanying drawings may also be derived from these accompanying drawings without creative efforts.
FIG. 1 is a schematic flow chart of a road determination method according to an embodiment of the present application;
FIG. 2 is a schematic flow chart of a road determination method according to another embodiment of the present application;
FIG. 3 is a schematic diagram for determining a second road according to an embodiment of the present application;
FIG. 4 is a diagram showing a hardware structure of a road determination apparatus according to an embodiment of the present application;
FIG. 5 is a functional module diagram of a road determination logic according to an embodiment of the present application; and
FIG. 6 is a functional module diagram of a road determination logic according to another embodiment of the present application.

### DESCRIPTION OF THE EMBODIMENTS

To make the objectives, technical solutions, and advantages of the embodiments of the present application clearer, technical solutions in the embodiments of the present application will be described clearly and completely below with reference to the accompanying drawings in the embodiments of the present application. Apparently, the described embodiments are some but not all of the embodiments of the present application. Components of the embodiments of the present application, as generally described and illustrated in the accompanying drawings herein, may be arranged and designed in a wide variety of different configurations. Thus, the following detailed description of the embodiments of the present application, as provided in the accompanying drawings, is not intended to limit the scope of the present application as claimed, but is merely representative of selected embodiments of the present application. All other embodiments obtained by those skilled in the art based on the embodiments of the present application without creative efforts shall fall within the protection scope of the present application.

In one embodiment, when determining a road corresponding to a place (a starting point or an end point), the presence of the obstacles such as railways and rivers between the place and the determined road may be ignored, making it difficult for a user to use the finally determined navigation route, and thus resulting in a problem that the navigation result is unavailable. The present application provides a road determination method and apparatus, which are described in detail below with reference to the embodiments.

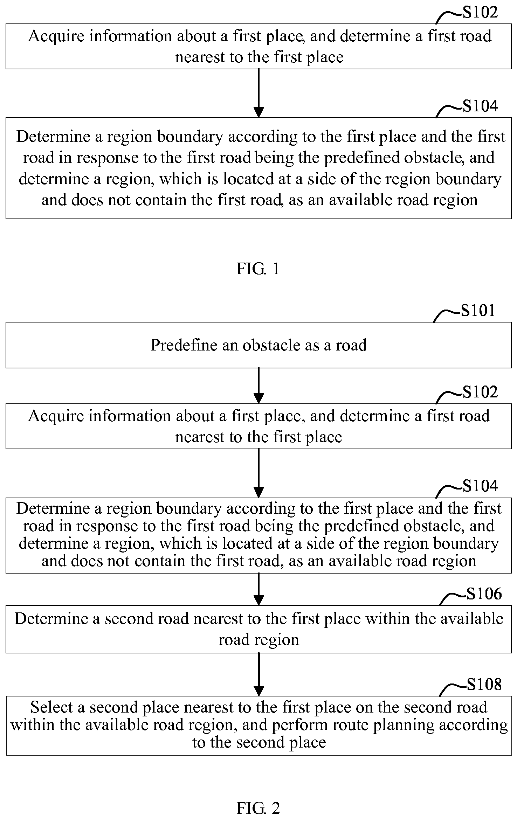

FIG. 1 is a schematic flow chart of a road determination method according to an embodiment of the present application. As shown in FIG. 1, the method includes following steps:
Step S102: acquiring information about a first place, and determine a first road nearest to the first place.

An obstacle is predefined as a road prior to acquiring the information about the first place. When the first road nearest to the first place is determined, it is determined whether the first road is the predefined obstacle. For example, it is determined whether the first road is an obstacle such as a railway, a river or a building, etc. A determination process may include: searching for a tag of the first road; if the tag of the first road is an ordinary road, determining that the first road is not the predefined obstacle; if the tag of the first road is an obstacle, determining the first road as the predefined obstacle. If the first road is determined as the predefined obstacle, a region boundary is determined based on the first place and the first road, and a region, which is located at a side of the region boundary and does not contain the first road, is determined as an available road region.

In this embodiment, the first place may be provided by the user and includes a starting point or an end point. The starting point may refer to a starting point of a route required to be navigated for the user, the end point may refer to an end point of the route required to be navigated for the user, and the information about the first place may include a name of a city to which the first place belongs, longitude and latitude information of the first place, etc.

An execution subject of the method in this embodiment of the present application may be a server located at a back end. When the execution subject is a server, the server internally stores a complete electronic map, and stores a complete code corresponding to the method in this embodiment, and the server runs the code of the method through an internal processor, thereby executing the method in this embodiment. In this case, the server communicates with a user terminal (e.g., a mobile phone), and acquires location data about the first place reported by the user terminal. In one example, the first place may be inputted by the user into the user terminal. For example, the user terminal receives the location data about the first place inputted by the user and sends the location data about the first place to the server, such that the server acquires the first place. In another example, the user terminal may automatically position the current location to obtain the location data about the first place, and automatically report the location data about the first place to the server. Considering that the location of the user terminal may be constantly changing, the user terminal may automatically position the current location periodically to obtain the location data about the first place, and report the location data about the first place to the server periodically, thus the user does not need to input the location data about the first place.

The execution subject of the method in this embodiment of the present application also may be a user terminal positioned at a front end. When the execution subject is a user terminal, the user terminal internally prestores a complete offline electronic map, and stores a complete code corresponding to the method in this embodiment, and the user terminal runs the code of the method through an internal processor, thereby executing the method in this embodiment. In one example, the user terminal receives location data about the first place inputted by the user to obtain the first place. In another example, the user terminal automatically positions the current location periodically to obtain the location data about the first place, thus the user does not need to input the location data about the first place.

For ease of description of some embodiments, the following contents will no longer emphasize whether the execution subject is the server or the user terminal. It can be understood that the method in this embodiment may be either executed by the server at the back end or executed by the user terminal at the front end.

After the first place is acquired, the first road nearest to the first place is determined in the electronic map. Any method in the related art may be employed to determine the first road nearest to the first place, which is thus not described in detail herein.

Step S104: determining a region boundary according to the first place and the first road if the first road is the predefined obstacle, and determining a region, which is located at a side of the region boundary and does not contain the first road, as an available road region. The obstacle at least includes a railway, a river, and a building, etc.

In this step, determining the region boundary according to the first place and the first road may be implemented in the following way.

In an embodiment, a route which is at a preset distance from the first place and parallel to the first road may be determined as the region boundary, wherein the preset distance is larger than zero and less than a vertical distance between the first place and the first road.

The preset distance is larger than zero and less than the vertical distance between the first place and the first road. A route which is at a preset distance from the first place and parallel to the first road is determined in an electronic map, wherein the distance from the first place refers to a vertical distance between the first place and the first road.

Because each road is set to have no turning in this embodiment, the first road has no turning when the first road is the obstacle. Therefore, a route which is at a preset distance from the first place and parallel to the first road can be conveniently determined. This route may be determined as a region boundary of an available road region. Here it is merely limited that region boundary is of the preset distance from the first place and that the preset distance is larger than zero and less than the vertical distance between the first place and the first road, but it is not limited the direction of the region boundary to which the first place points. Therefore, when the direction of the region boundary to which the first place points coincides with the direction of the first road to which the first place points, the region boundary is positioned between the first place and the first road. When the direction of the region boundary to which the first place points is opposite to the direction of the first road to which the first place points, the region boundary is positioned on one side of the first place away from the first road.

In another embodiment, a route which passes across the first place and parallels to the first road may be determined as the region boundary. Specifically, the route which passes across the first place and parallels to the first road is determined as the region boundary by determining a vertical route between the first place and the first road and determining a route which passes across the first place and is perpendicular to the vertical route as the region boundary. The first road has no turning, and thus the vertical route between the first place and the first road is determined, and a route perpendicular to the vertical route parallel to the first road. Therefore, the route which passes across the first place and is perpendicular to the vertical route is determined as the region boundary, and the region boundary is determined to pass across the first place and parallel to the first road.

In this step, after the region boundary of the available road region is determined, the map may be divided into two portions by the region boundary, and a region which is located at a side of the region boundary and does not contain the first road is the available road region.

In the embodiments of the present application, first an obstacle is predefined as a road, then information about a first place is acquired, and next a first road nearest to the first place is determined. A region boundary is determined according to the first place and the first road if the first road is the predefined obstacle, and a region which is located at a side of the region boundary and does not contain the first road is determined as an available road region. The available road region determined in the embodiments of the present application does not contain the first road, and thus an obstacle nearest to the first place is excluded from the available road region. Therefore, within the available road region, it may be conveniently determined a road between which and the first place no obstacle exists. Using the road determination method provided in this embodiment, an available road region may be provided, and it is convenient to determine, within the available road region, a road between which and a place no obstacle exists. In this way, it is solved the problem, in the related art, of unreasonable route planning caused by obstacles such as railways or rivers present between the place and the determined road.

FIG. 2 is a schematic flow chart of a road determination method according to another embodiment of the present application. As shown in FIG. 2, in the embodiment of the present application, before Step S102, the method further includes the following step:
Step S101: marking an obstacle as a road.

The obstacle may include a railway, a river, and a building, etc. Considering that railways, rivers and large obstacles likely have turnings in an extension direction, the obstacle may be marked as one or more roads according to a turning condition of the obstacle in this step. If the obstacle has turnings, the obstacle is marked as a plurality of roads according to the turning points, and each of the plurality of roads has no turnings. If the obstacle has no turning point, the obstacle is marked as one road.

In this embodiment, the obstacle refers to an object or a route that the user cannot pass across or make a detour by walking or taking simple means of transportation such as bicycles. For example, the obstacle may be a railway, especially a railway blocked by fences, or a river, or a building, especially a building that is too long for the user to make a detour. It is to be noted that the obstacle in this embodiment is not limited to a railway, a river and a building, and other object or route that the user cannot pass across or make a detour by walking or riding bicycles may be determined as the obstacle. After the obstacle is defined, the obstacle may be marked as a road in the electronic map.

Considering that the obstacle is a railway, a river or a large building, which has a long length stretching for several kilometers and may turn in direction. For example, the river flows 200 meters from due east to due west, and then continues to flow after turning to the northwest. In this case, if the obstacle is marked as one road, there exists a problem that the road is too long, is complex in turning condition and difficult to determine a road direction. Therefore, in this embodiment, the obstacle may be marked as one or more roads according to a turning condition of the obstacle. If the obstacle has no turning point, the obstacle is marked as one road. If the obstacle has turnings, each of the turning points on the obstacle is determined, and the obstacle between every two turning points is marked as one road, such that the obstacle is marked as a plurality of roads, wherein each of the roads has no turning points.

In this embodiment, the turning point of the obstacle is determined by: abstracting the obstacle as a section of curve in the electronic map, determining a point on the curve at every preset distance in the electronic map, for example, determining a point on the curve every 1cm, drawing lines tangent to the curve along the determined points, determining two tangent points of two adjacent tangent lines on the curve when an included angle between the two adjacent tangent lines is larger than a preset angle (e.g., 30 degrees), and determining either of the two tangent points as the turning point of the obstacle. In this way, when the obstacle is a river or a railway whose direction is constant, the obstacle has no turning point. However, when the obstacle is a river or a railway whose direction is variable, the obstacle has at least one turning point. For arc-shaped portions of the obstacle, such as arc-shaped portions of the river or the railway, turning points may be determined in the arc-shaped portions by adjusting appropriate preset distance and preset angle by the above way of determining the turning points.

In common urban planning, the length of a road is generally not too long, ranging from 500m to 1,000m, and when the road turns, traffic lights generally are provided at turnings, such that the road is divided into two roads by the traffic lights. In Step S101, the obstacle is marked as one or more roads according to the turning condition of the obstacle, such that the marked road has no turning, which is consistent with the manner of setting a road in the urban planning. After the obstacle is marked as a road, the obstacle may be closer to a real road, which facilitates the execution of the subsequent step of road determination.

In this step, marking the obstacle as a road is equivalent to adding the obstacle to road network data. In this embodiment, the obstacle is added to the road network data, such that the obstacle can be selected as a road, thereby determining the available road region that does not contain any obstacle according to the selected obstacle.

As shown in FIG. 2, after Step S104, the method in this embodiment further includes following steps:
Step S106: determining a second road nearest to the first place within the available road region.

After the available road region is determined, the second road nearest to the first place is determined within the available road region. The first road has been excluded from the available road region, i.e., the obstacle nearest to a place provided by the user has been excluded. Therefore, the second road is determined as a normal road within the available road region, and no obstacle exists between the second road and the place provided by the user.

Step S108: selecting a second place nearest to the first place on the second road within the available road region, and performing route planning according to the second place.

Considering that a portion of the second road is divided within the available road region and the other portion of the second road is divided outside the available road region, in Step S108, the second place nearest to the first place is selected on the second road within the available road region. When the entire second road is within the available road region, a vertical mapping point of the first place on the second road is a second place. When the second road is partially within the available road region, the second place is a point nearest to the first place on the second road. A connection line between the first place and the second place is not necessarily perpendicular to the second road. After the second place is determined, the route planning may be carried out based on the second place.

By using the method as shown in FIG. 2, the second place on the road corresponding to the first place may be determined, and a complete route planning may be carried out based on the second place. Since no obstacle exists between the second road and the first place, route navigation results obtained based on the second place is accurate and reliable, and may be available for the user. A road corresponding to a place is determined and a route planning is carried out using the method in this embodiment, which is simple in algorithm process and low in time complexity and thus is easy for implementation.

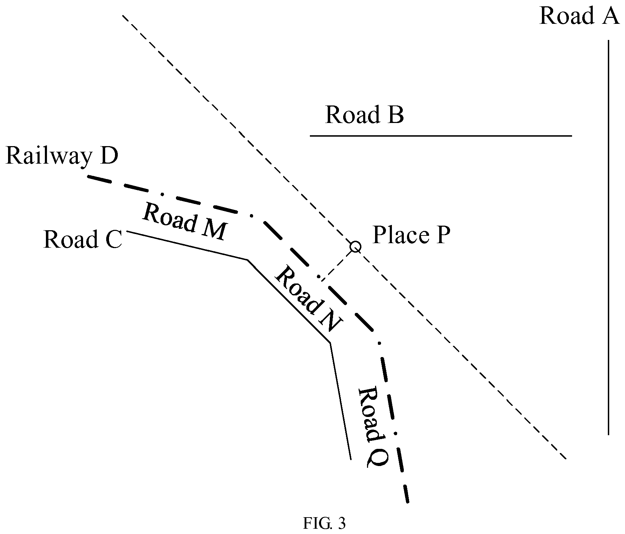

FIG. 3 is a schematic diagram for determining a second road according to an embodiment of the present application. As shown in FIG. 3, the electronic map includes three roads A, B and C and a railway D, and the place P provided by the user has been shown in the figure. In FIG. 3, the road C is the nearest to the place P, followed by the road B, and finally the road A. If the railway D is not marked as a road, the road C will be selected when a road corresponding to the place P is determined based on distance. However, the railway D exists between the place P and the road C, and the user cannot pass cross the railway D from the place P to reach the road C, and thus the route planning is unreasonable.

Specific process of determining the road corresponding to the place P by using the method in this embodiment is as follows.
(1) Due to presence of turnings on the railway D, the railway D may be marked as a road M, a road N and a road Q according to each turning point, specifically as shown in FIG. 3.
(2) A road nearest to the place P is determined as the road N.
(3) The road N is determined as a railway according to the tag of the road N, a vertical line between the place P and the road N is made in the electronic map, and the vertical line is rotated by 90 degrees clockwise around the place P and then is rotated by 90 degrees counterclockwise around the place P to obtain a route T which is perpendicular to the vertical line, passes across the place P and parallels to the road N.
(4) A region (such as the region on the upper right of the route T in FIG. 3) which is located at a side of the route T in the electronic map and does not contain the road N is determined as the available road region.
(5) A road nearest to the place P is selected, within the available road region, as the road B.

As shown in FIG. 3, by the method in this embodiment, the railway D is marked as the road M, the road N and the road Q in advance, thus when the road nearest to the place P is selected for the first time, the railway D can be selected if the road N on the railway D is the nearest to the place P. After the railway D is selected, the available road region is determined based on the railway D and the place P. Since the obstacle nearest to the place P is excluded from the available road region, no obstacle exists between the place P and the road nearest to the place P selected within the available road region. In this way, the road corresponding to the place P is determined.

In summary, a road corresponding to a starting point or an end point can be selected by using the method in this embodiment, and no obstacle exists between the selected road and the starting point or the end point.

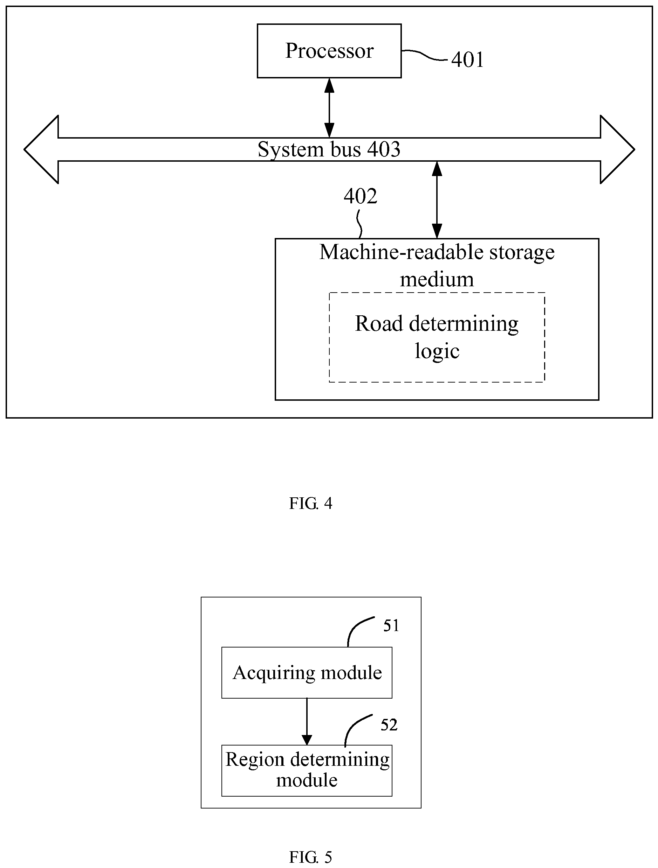

Corresponding to the above road determination method, an embodiment of the present application further provides a road determination apparatus. FIG. 4 is a hardware structure diagram of a road determination apparatus. The road determination apparatus may include a processor 401 and a machine-readable storage medium 402 in which machine-executable instructions are stored. The processor 401 may communicate with the machine-readable storage medium 402 via a system bus 403. Furthermore, the processor 401 may perform the above-described road determination method by reading and executing the machine-executable instructions corresponding to a road determination logic in the machine-readable storage medium 402.

The machine-readable storage medium 402 as mentioned herein may be any electronic, magnetic, optical or other physical memory devices, which may contain or store information such as executable instructions or data, etc. For example, the machine-readable storage medium may be a random access memory (RAM), a volatile memory, a nonvolatile memory, a flash memory, a memory drive (such as a hard disk drive), a solid state drive, any type of memory disks (such as an optical disk or a DVD and so on), or similar storage medium or a combination thereof.

FIG. 5 is a functional module diagram of a road determination logic according to an embodiment of the present application. As shown in FIG. 5, functionally divided, the road determination logic may include an acquiring module 51 and a region determining module 52.

The acquiring module 51 may be configured to predefine an obstacle as a road, acquire information about a first place, and determine a first road nearest to the first place. The first place includes a starting point or an end point.

The region determining module 52 may be configured to determine a region boundary according to the first place and the first road if the first road is the predefined obstacle, and determine a region, which is located at a side of the region boundary and does not contain the first road, as an available road region.

In an embodiment, the region determining module 52 may be configured to determine a route, which is at a preset distance from the first place and parallel to the first road, as the region boundary, wherein the preset distance is larger than zero and less than a distance between the first place and the first road.

In another embodiment, the region determining module 52 may be configured to determine a route, which passes across the first place and parallels to the first road, as the region boundary.

In the embodiments of the present application, first an obstacle is predefined as a road, then information about a first place is acquired, and next a first road nearest to the first place is determined. A region boundary is determined according to the first place and the first road if the first road is the predefined obstacle, and a region which is located at a side of the region boundary and does not contain the first road is determined as an available road region. The available road region determined in the embodiments of the present application does not contain the first road, and thus an obstacle nearest to the first place is excluded from the available road region. Therefore, within the available road region, it may be conveniently determined a road between which and the first place no obstacle exists. Using the road determination apparatus provided in this embodiment, an available road region may be provided, and it is convenient to determine, within the available road region, a road between which and a place no obstacle exists. In this way, it is solved the problem of unreasonable route planning caused by obstacles such as railways or rivers present between the place and the determined road.

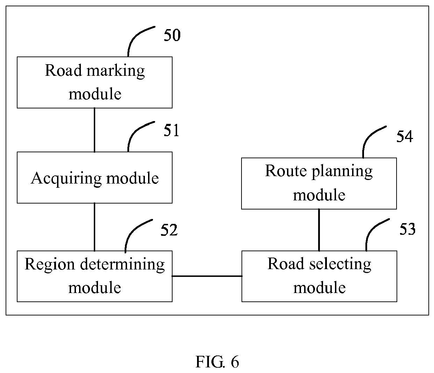

Further, as shown in FIG. 6, the road determination logic in this embodiment further includes a road marking module 50, which may be configured to mark the obstacle as one or more roads according to a turning condition of the obstacle before the acquiring module 51 acquires the information about the first place.

In an embodiment, the road marking module 50 includes: a first marking submodule, configured to mark the obstacle as a plurality of roads according to each turning point of the obstacle if the obstacle has turnings; and a second marking submodule, configured to mark the obstacle as one road if the obstacle has no turning point.

As shown in FIG. 6, the road determination logic in this embodiment further includes a road selecting module 53 and a route planning module 54. The road selecting module 53 may be configured to determine a second road nearest to the first place within the available road region.

The route planning module 54 may be configured to select a second place nearest to the first place on the second road within the available road region after determining the second road nearest to the first place within the available road region, and performing route planning according to the second place.

The route planning module 54 as shown in FIG. 6 may determine the second place on a road corresponding to the first place, and perform complete route planning based on the second place. No obstacle exists between the second road and the first place. Therefore, a route navigation result obtained based on the second place is accurate and reliable, and thus may be used by a user. A road corresponding to a place is determined and a route planning is carried out using the road determination apparatus provided in this embodiment, which is simple in algorithm process and low in time complexity and thus is easy for implementation.

Corresponding to the above road determination method, an embodiment of the present application further provides a machine-readable storage medium, for example, the machine-readable storage medium 402 as shown in FIG. 4. The machine-executable instructions may be executed by the processor 401 in the road determination apparatus to implement the above-described road determination method.

Specifically, the storage medium can be a general-purpose storage medium, such as a USB flash disk, a removable disk, a hard disk, or a compact disk, etc. When a computer program on the storage medium is operated, the road determination method can be performed, an available road region can be provided, and it is convenient to determine, within the available road region, a road between which and a place no obstacle exists. In this way, it is solved the problem of unreasonable route planning caused by obstacles such as railways or rivers present between the place and the determined road.

The road determination apparatus provided by the embodiments of the present application may be specific hardware on a device or software or firmware installed on the device, etc. The implementation principle and the technical effect of the apparatus provided by the embodiments of the present application are the same as those of the foregoing method embodiments. For a brief description, reference may be made to the corresponding content in the foregoing method embodiments for undisclosed details about the apparatus embodiments. Persons skilled in the art may clearly understand that for a convenient and concise description, a concrete work process of systems, apparatuses and units described above may refer to a corresponding process of the foregoing method embodiments, which is not repeated anymore herein.

In the embodiments provided in the present application, it should be understood that the disclosed apparatuses and methods may be implemented by means of other manners. The apparatus embodiments described above are merely exemplary. For example, a unit partition is merely a logic functional partition. In actual implementation, additional manners of partitioning may be available. For another example, multiple units or components may be combined or integrated into another system, or some features may be ignored or not executed. In addition, the displayed or discussed mutual couplings or direct couplings or communication connections may be implemented by using some communication interfaces. The indirect couplings or communication connections between the apparatuses or units may be implemented in electronic, mechanical, or other forms.

The units described as separate parts may or may not be physically separate, and parts displayed as units may or may not be physical units, i.e., either located at one place or distributed on a plurality of network units. Units may be selected in part or in whole according to actual needs for achieving objectives of the solution of this embodiment.

In addition, various functional units in various embodiments provided by the present application may be integrated into one processing unit, or various units may be separately or physically existent, or two or more units may be integrated into one unit.

When the functions are implemented in a form of a software functional unit and sold or used as an independent product, the functions may be stored in a computer-readable storage medium. On the basis of such an understanding, the technical solution of the present application in essence or that part of contribution to the prior art or a part of the technical solution may be embodied in the form of software products, which may be stored in a storage medium, comprising some instructions to cause a computer device (a personal computer, a server, a network device or the like) to execute all or a part of steps of the method as recited in the embodiments of the present application. The aforementioned storage medium may include: a USB flash disk, a mobile hard disk, a read-only memory (ROM), a random access memory (RAM), a magnetic disk or an optical disk and other media capable of storing a program code.

It is to be noticed that in the following accompanying drawings, similar reference numbers and letters indicate similar items. Therefore, once a certain item is defined in a certain drawing, it is unnecessary to further define and interpret this item in subsequent drawings. In addition, terms such as "first", "second" and "third" are used only for purposes of distinguishable description and are not intended to indicate or imply relative importance.

Finally, it should be noted that the foregoing embodiments merely serve as specific embodiments of the present application, and are intended for describing the technical solutions of the present application, but not for limiting the present application, and the scope of protection of the present application is not limited thereto. Although the present application is described in detail with reference to the foregoing embodiments, persons of ordinary skill in the art should understand that they may still make modifications to the technical solutions described in the foregoing embodiments or make equivalent replacements to some technical features thereof, which does not make corresponding technical solutions in essence depart from the spirit and the scope of the technical solutions of the embodiments of the present application. Any modifications or replacements easily conceivable to a person of skilled in the art shall fall within the scope of protection of the present application. Therefore, the scope of protection of the present application shall be subject to the scope of protection of the claims.

## Claims

1. A road determination method, comprising:
predefining an obstacle as a road;
acquiring information about a first place, and determining a first road nearest to the first place; and
determining a region boundary according to the first place and the first road if the first road is the predefined obstacle, and determining a region, which is located at a side of the region boundary and does not contain the first road, as an available road region.

2. The method according to claim 1, wherein, predefining the obstacle as the road comprises:
marking the obstacle as one or more roads according to a turning condition of the obstacle.

3. The method according to claim 2, wherein, marking the obstacle as one or more roads according to the turning condition of the obstacle comprises:
marking the obstacle as a plurality of roads connected successively according to each turning point of the obstacle if the obstacle has a turning;
marking the obstacle as one road if the obstacle does not have turning.

4. The method according to claim 1, wherein, determining the region boundary according to the first place and the first road comprises:
determining a route, which is at a preset distance from the first place and parallel to the first road, as the region boundary;
wherein the preset distance is larger than zero and less than a vertical distance between the first place and the first road.

5. The method according to claim 1, wherein, determining the region boundary according to the first place and the first road comprises:
determining a route, which passes across the first place and parallels to the first road, as the region boundary.

6. The method according to claim 1 further comprising:
determining a second road nearest to the first place within the available road region.

7. The method according to claim 6 further comprising:
selecting a second place nearest to the first place on the second road within the available road region; and
performing route planning according to the second place.

8. A road determination apparatus, comprising:
a processor; and
a machine-readable storage medium;
wherein the machine-readable storage medium stores machine-executable instructions executable by the processor, and the processor is caused by the machine-executable instructions to:
predefine an obstacle as a road;
acquire information about a first place, and determine a first road nearest to the first place; and
determine a region boundary according to the first place and the first road if the first road is the predefined obstacle, and determine a region, which is located at a side of the region boundary and does not contain the first road, as an available road region.

9. The apparatus according to claim 8, wherein when the obstacle is predefined as the road, the processor is caused by the machine-executable instructions to:
mark the obstacle as one or more roads according to a turning condition of the obstacle.

10. The apparatus according to claim 9, wherein when the obstacle is marked as one or more roads according to the turning condition of the obstacle, the processor is caused by the machine-executable instructions to:
mark the obstacle as a plurality of roads connected successively according to each turning point of the obstacle if the obstacle has turning;
mark the obstacle as one road if the obstacle does not have turning.

11. The apparatus according to claim 8, wherein when determining the region boundary according to the first place and the first road, the processor is caused by the machine-executable instructions to:
determine a route, which is at a preset distance from the first place and parallel to the first road, as the region boundary, wherein the preset distance is larger than zero and less than a vertical distance between the first place and the first road.

12. The apparatus according to claim 8, wherein when determining the region boundary according to the first place and the first road, the processor is caused by the machine-executable instructions to:
determine a route, which passes across the first place and parallels to the first road, as the region boundary.

13. The apparatus according to claim 8, wherein the processor is caused by the machine-executable instructions to:
determine a second road nearest to the first place within the available road region.

14. The apparatus according to claim 13, wherein the processor is caused by the machine-executable instructions to:
select a second place nearest to the first place on the second road within the available road region; and
perform route planning according to the second place.

15. A machine-readable storage medium, storing machine-executable instructions, wherein when being called and executed by a processor, the machine-executable instructions cause the processor to perform the road determination method according to claim 1.
